# EUROPEAN PATENT SPECIFICATION

(11) **EP 0 733 600 B1**
(45) Date of publication and mention of the grant of the patent: **12.01.2000**
(21) Application number: 96201682.0
(22) Date of filing: 25.08.1992
(51) Int. Cl.: C03C 13/04, H01S 3/06

(54) **Optical fiber for optical amplifier**
Optische Faser für optische Verstärker
Fibre optique pour amplificateur optique

(30) Priority: 26.08.1991 JP 21356891; 30.03.1992 JP 7439492; 21.04.1992 JP 10142492; 15.06.1992 JP 15538692; 16.06.1992 JP 15705892
(43) Date of publication of application: 25.09.1996
(62) Divisional of application: 92307736.6
(73) Proprietor: NIPPON TELEGRAPH AND TELEPHONE CORPORATION, Shinjuku-ku, Tokyo 163-19 (JP)
(72) Inventor: Ohishi, Yasutake, Mito-shi, Ibaraki (JP); Kanamori, Terutoshi, Mito-shi, Ibaraki (JP); Nishida, Yoshiki, Mito-shi, Ibaraki (JP); Mori, Atsushi, Mito-shi, Ibaraki (JP); Sudo, Shoichi, Mito-shi, Ibaraki (JP)
(74) Representative: Beresford, Keith Denis Lewis

(56) References cited:
- EP-A- 0 312 084
- ELECTRONICS LETTERS, vol. 27, no. 16, 1 August 1991, pages 1472-1474, XP000259877 LOBBETT R ET AL: "SYSTEM CHARACTERISATION OF HIGH GAIN AND HIGH SATURATED OUTPUT POWER, PR3+-DOPED FLUOROZIRCONATE FIBRE AMPLIFIER AT 1.3UM"
- ELECTRONICS LETTERS, vol. 27, no. 8, 11 April 1991, pages 628-629, XP000228291 CARTER S F ET AL: "AMPLIFICATION AT 1.3UM IN A PR3+-DOPED SINGLE-MODE FLUOROZIRCONATE FIBRE"
- CHEMICAL ABSTRACTS, vol. 112, no. 24, 11 June 1990 Columbus, Ohio, US; abstract no. 222185j, page 331; XP002017417 & JP-A-01 294 550 (SUMITA OPTICAL GLASS MFG. CO., LTD.) 28 November 1989
- GLASS TECHNOLOGY, vol. 28, no. 1, February 1987, SHEFFIELD GB, pages 38-42, XP000590880 H. POIGNANT ET AL.: "The preparation of fluoride glass single mode fibres"
- CHEMICAL ABSTRACTS, vol. 109, no. 12, 19 September 1988 Columbus, Ohio, US; abstract no. 97721r, page 287; XP002017418 & JP-A-63 107 841 (NIPPON TELEGRAPH AND TELEPHONE PUBLIC CORPORATION) 12 May 1988

## Description

The present invention relates to an optical fibre for use in an optical fibre amplifier (e.g. for 1.3 µm band) to be used in optical communication systems, and more specifically, to a rare earth metal ion-doped fluoride-based optical fibre having a high gain coefficient for optical amplifiers.

In recent years, studies have been energetically performed on optical fibre amplifiers which involve doping of the core of an optical fibre with rare earth metal ions, especially Er³⁺ ions, to induce stimulated emission as a result of transition within the 4f shell, so that they may be applied to 1.5 µm optical communication systems. Rare earth metal ion-doped optical fibre amplifiers are high in gain and have gain characteristics not dependent on polarization of beam. They also have a low noise index and broad-band wavelength characteristics. Therefore, their application to optical communication system is very attractive.

The 1.3 µm band, in which wavelength dispersion in a quartz-based optical fibre becomes zero, is an important wavelength band for optical communication along with the 1.5 µm band. Researches into optical fibre amplifiers operating at 1.3 µm have been carried out using Nd³⁺ ion doped silica-based optical fibres or fluoride optical fibres.

In both optical fibres, however, the excited state absorption of Nd³⁺ ions is great at a wavelength of 1.31 µm which is used in optical communication. Therefore, no amplification has been confirmed as described, for example, in W. J. Miniscalco, L. J. Andrews, B. A. Thompson, R. S. Quimby, L. J. B. Vacha and M. G. Drexhage, "Electron. Lett." (vol. 24, 1988, p. 28), or Y. Miyajima, T. Komukai, Y. Sugawa and Y. Katsuyama, "Technical Digest Optical Fiber Communication Conference '90 San Francisco" (1990, PD16).

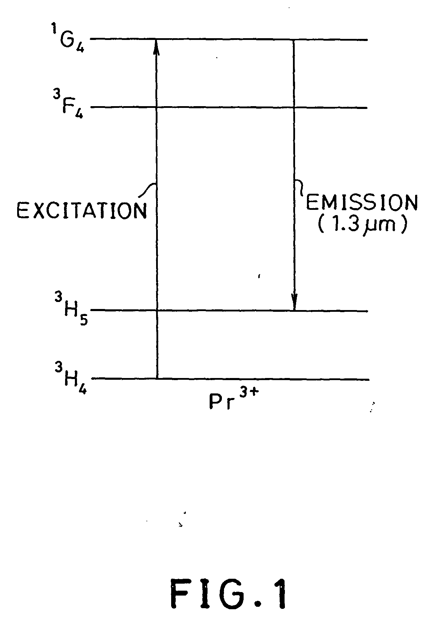

Under these circumstances, there is a keen demand for optical fibre amplifiers which have an amplifying effect at 1.31 µm. One of the candidates is an optical fibre amplifier using an optical fibre comprising a ZrF₄-based fluoride glass as a host material and being doped with Pr³⁺ as laser-activating ions, as proposed in Y. Ohishi, T. Kanamori, T. Kitagawa, S. Takanashi, E. Snitzer and G. H. Sigel "Technical Digest Optical Fiber Communication Conference '91 San Diego" (1991, PD2). This optical fibre amplifier utilizes the stimulated emission of the ¹G₄-³H₅ transition of Pr³⁺ ions, as seen from the energy level diagram of Pr³⁺ ions in Fig. 1. That is, light emission at the 1.3 µm band is due to the transition from ¹G₄ to ³H₅. As shown in Fig. 1, the lower level ³H₅ is higher than the ground state ³H₄, thus forming a four level system. The central wavelength of emission is 1.322 µm. The wavelength used for pumping is 1.017 µm which causes excitation from the ground level ³H₄ directly to the upper level ¹G₄.

The above-mentioned optical fibre amplifier, however, is defective in that the energy difference between the ¹G₄ level and the ³F₄ level is as small as about 3,000 cm⁻¹. In detail, the phonon energy of the ZrF₄-based fluoride glass as the host material is 500 cm⁻¹. Hence, phonon relaxation from the ¹G₄ level to the ³F₄ level easily occurs, and the quantum efficiency of the ¹G₄ - ³H₅ transition is as low as 3% in the ZrF₄-based fluoride glass, thus making the degree of amplification per unit pump power, i.e. gain coefficient, remain at about 0.2 dB/mW (Y. Ohishi, T. Kanamori, J. Temmyo, M. Wada, M. Yamada, M. Shimizu, K. Yoshino, H. Hanafusa, M. Horiguchi and S. Takahashi, Electronics Letters, vol. 27, no. 22, pp. 1995-1996, 1991).

Thus, a high pump power of 25 mW is required for obtaining a gain of, for example, 5 dB.

Since the output power of a laser diode has its own limitations, however, an increase in the gain coefficient of a rare earth metal ion-doped optical fibre for an optical amplifier is necessary in order to obtain a sufficiently high gain for practical use by pumping the laser diode.

The object of the present invention is to solve the above-described problems and provide an optical fibre for an optical amplifier capable of operating with sufficient gain (e.g. at the 1.3 µm band).

The present inventors conducted extensive studies and found that the object could be attained by decreasing the phonon energy of the bond between the metal and fluorine, e.g. Zr-F bond, in the fluoride glass. The present invention has been accomplished based on this discovery.

According to the present invention, there is provided a fluoride glass optical fibre for an optical amplifier having a core and a cladding and containing rare earth metal ions in a core glass, characterised in that part of the fluorine in the fluoride glass is substituted by at least one halogen other than fluorine.

Here, the rare earth metal ions may be ones selected from the group consisting of Pr³⁺, Pr³⁺-Yb³⁺, Pr³⁺-Nd³⁺, and Pr³⁺-Er³⁺.

The core may have a core radius of 1.95 µm or less.

It is acknowledged that EP-A-0312084 discloses a fluoride glass containing a small amount of chlorine in addition to fluorine which has advantages in that (1) it is less liable to crystallise as compared with a fluoride glass containing no chlorine and yet shows substantially no deterioration in chemical durability and mechanical strength due to chlorine inclusion and (2) its refractive index can easily be changed by changing the amount of chlorine. Specifically the glass is a fluoroaluminate glass comprising as cations Al ion, Zr ion and/or Hf ion and at least one ion selected from Ca ion, Sr ion and Ba ion, and, as anions, F ion and Cl ion, wherein the proportion of each cation in the total cations in terms of mol % is such that Al is 20-45%, Zr ion and/or Hf ion is 0.5-25%, Ca ion is 0-42%, Sr ion is 0-25%, Ba ion is -025%, and the total of Ca ion, Sr ion and Ba ion is 20-70%, and the proportion of each anion in the total anions in terms of mol % is such that 90% ≤ F ion < 100% and 0% < Cl ion ≤ 10%.

The above and other objects, effects, features and advantages of the present invention will become more apparent from the following description of embodiments thereof taken in conjunction with the accompanying drawings.
Fig. 1 is an energy level diagram illustrating energy levels of Pr³⁺;
Fig. 2A is a graph illustrating a gain characteristic of an optical fibre, plotting signal gain per pump power of 100 mW vs. core radius;
Fig. 2B is a graph illustrating a gain characteristic of an optical fibre, plotting signal gain per pump power of 100 mW vs. core radius;
Fig. 3 is a block diagram illustrating an arrangement of an optical amplifier to which the optical fibre for an optical amplifier in accordance with an embodiment of the present invention is applicable; and

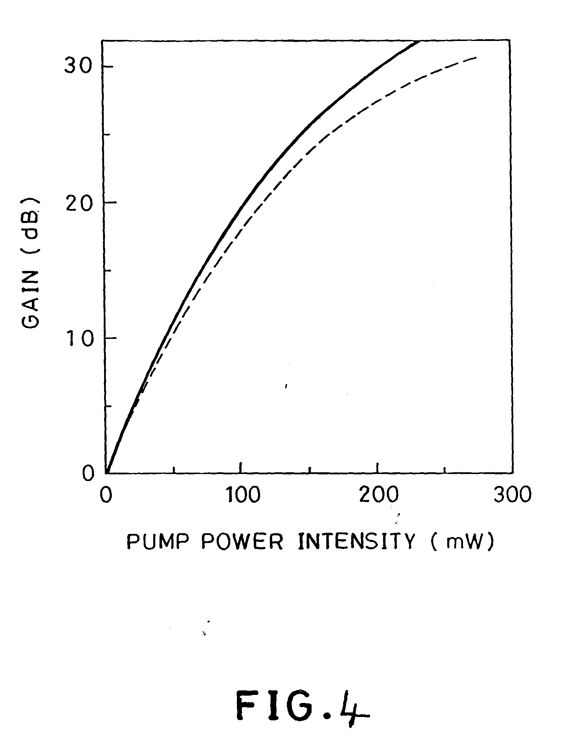

Fig. 4 is a graph illustrating dependence, on the pump power, of gain in an optical fibre amplifier using a mixed halide glass optical fibre in which the composition of the core glass is 49ZrF₄-17BaF₂-8BaCl₂-3.5LaF₃-2.0YF₃-2.5AlF₃-18.0LiF (mol%), and the composition of the cladding glass is 49ZrF₄-10BaF₂-15BeF₂-3.5LaF₃-2.0YF₃-2.5AlF₃-18LiF (mol%), along with the characteristics of a comparison optical fibre amplifier in which the composition of the core glass is 53ZrF₄-16BaF₂-15PbF₂-3.5LaF₃-2.0YF₃-2.5AlF₃-8LiF (mol%), and that of the cladding glass is 47.5ZrF₄-23.5BaF₂-2.5LaF₃-2.0YF₃-4.5AlF₃-20NaF (mol%).

The fluoride glasses constituting the optical fibre for an optical amplifier in accordance with the present invention are selected from ZrF₄ glass, and InF₃ glass (Tomozawa and Poremus, Treatise on Materials Science and Technology, volume 26, Chapter 4, Academic Press, Inc., 1985). A mixed halide glass is prepared by substituting part of the fluorine in the composition of the above-mentioned fluoride glasses by one or more other halogens, such as chlorine (Cl), bromine (Br) or iodine (I).

According to the present invention, part of the fluorine contained in the fluoride glass is substituted by at least one other halogen, thereby making it possible to improve quantum efficiency, and achieve a high efficiency in optical amplification.

A halide glass such as chloride glass, bromide glass or iodide glass is known as a glass with a smaller phonon energy than that of a fluoride glass. If one of these halide glasses is Pr³⁺-doped and used as the host material of an optical fibre for an optical amplifier, it is expected that an optical fibre amplifier with a high efficiency can be provided. These halide glasses, however, are highly deliquescent, and unsuitable for practice use. So-called mixed halide glasses comprising fluoride glass mixed with at least one of chloride glass, bromide glass, and iodide glass, on the other hand, are highly durable and suitable for practical use. The use of the mixed halide glass as the host material of an optical fibre doped with rare earth metal ions such as Pr³⁺, therefore, can provide a highly practical Pr³⁺-doped optical fibre for an optical amplifier.

In the case of ZrF₄ glass as the host material, for example, the phonon energy of the Zr-F bond is about 500 cm⁻¹. This phonon energy contributes mainly to multiphonon relaxation from ¹G₄ to ³F₄.

When Cl, Br or I is doped into the ZrF₄ glass, the fluorine of some Zr-F bonds is substituted by Cl, Br or I. This substitution results in the formation of Zr-Cl, Zr-Br or Zr-I bonds with a lower phonon energy than the phonon energy of the Zr-F bonds. As a result, the probability of multiphonon relaxation from ¹G₄ to ³F₄ lowers. This increases the quantum efficiency of the ¹G₄-³F₅ transition, and also improves gain coefficient.

The fluoride glass as the core glass that can be adapted for use as the optical fibre for an optical amplifier in accordance with the present invention includes, for example, the following:
(a) Fluoride glass with a core matrix containing 50 to 60 mol% of ZrF₄, 7 to 25 mol% of PbF₂, 6 to 19 mol% of BaF₂, 1.5 to 6 mol% of LaF₃, 0 to 4 mol% of at least one member selected from the group consisting of ScF₃, YF₃, GdF₃ and LuF₃, 1.5 to 5 mol% of AlF₃, and 3 to 12 mol% of LiF, with the total amount of the components being 100 mol%.
   In the case of deviation from the above range, i.e. 50 to 60 mol% of ZrF₄, 7 to 25 mol% of PbF₂, 6 to 19 mol% of BaF₂, 1.5 to 6 mol% of LaF₃, 1.5 to 5 mol% of AlF₃, and 3 to 12 mol% of LiF, with the total amount of these components being 100 mol%, no glass will be formed. Therefore, it is necessary that the amounts of the respective components be within the above-described range.
   If at least one of ScF₃, YF₃, GdF₃ and LuF₃ is added in an amount of 4 mol% or less to the above-mentioned fundamental components so that the total amount of the components may be 100 mol%, there will be a favorable effect that the glass is stabilized.
(b) Fluoride glass with a core matrix containing 10 to 40 mol% of InF₃, 20 to 50 mol% of ZnF₂, 5 to 25 mol% of PbF₂, 6 to 19 mol% of BaF₂, 5 to 15 mol% of SrF₂, 0 to 7 mol% of CdF₂, 0 to 10 mol% of LaF₃, 0 to 4 mol% of at least one member selected from the group consisting of ScF₃, YF₃, GdF₃ and LuF₃, 0 to 5 mol% of AlF₃, and 0 to 15 mol% of LiF or NaF, with the total amount of the components being 100 mol%.
   In the case of deviation from the above range, i.e. 10 to 40 mol% of InF₃, 20 to 50 mol% of ZnF₂, 5 to 25 mol% of PbF₂, 6 to 19 mol% of BaF₂, and 5 to 15 mol% of SrF₂ (the total amount: 100 mol%), no glass will be formed. Therefore, it is necessary that the amounts of the respective components be within the above-described range.
   If 7 mol% or less of CdF₂, 10 mol% or less of LaF₃, 0 to 4 mol% of at least one of ScF₃, YF₃, GdF₃ and LuF₃, 5 mol% or less of AlF₃, 15 mol% or less of LiF or NaF are added to the above to mentioned fundamental components in such amounts that the total amount of the components may be 100 mol%, there will be a favorable effect that the glass is stabilized.
   In this case, if these additional components are incorporated in amounts exceeding the above-mentioned amounts, the system will become microcrystalline and no glass will be formed. It is necessary, therefore, that the amounts of these additional components be within the above range.
(c) Fluoride glass with a core matrix containing 10 to 40 mol% of InF₃, 20 to 50 mol% of ZnF₂, 6 to 30 mol% of BaF₂, 5 to 15 mol% of SrF₂, 0 to 25 mol% of PbF₂, 0 to 7 mol% of CdF₂, 1.5 to 6 mol% of at least one member selected from the group consisting of LaF₃, ScF₃, YF₃, GdF₃ and LuF₃, 1.5 to 5 mol% of GaF₃, and 2 to 10 mol% of LiF or NaF, with the total amount of the components being 100 mol%.
   In the case of deviation from the above range, i.e. 10 to 40 mol% of InF₃, 20 to 50 mol% of ZnF₂, 6 to 30 mol% of BaF₂, and 5 to 15 mol% of SrF₂, 1.5 to 6 mol% of at least one of LaF₃, ScF₃, YF₃, GdF₃ and LuF₃, 1.5 to 5 mol% of GaF₃, and 2 to 10 mol% of LiF or NaF (the total amount: 100 mol%), no glass will be formed. Therefore, it is necessary that the amounts of the respective components be within the above-described range.
   If 25 mol% or less of PbF₂ or 7 mol% or less of CdF₂ are added to the above-mentioned fundamental components in such amounts that the total amount of the components may be 100 mol%, there will be a favorable effect that the glass is stabilized.
   In this case, if these additional components are incorporated in amounts exceeding the above-mentioned amounts, the system will become microcrystalline and no glass will be formed. It is necessary , therefore, that the amounts of these additional components be within the above range.
   The matrix composition of the cladding glass that can be adapted for the optical fibre for an optical amplifier in accordance with the present invention includes, for example, the following:
(d) Fluoride glass containing 10 to 40 mol% of InF₃, 20 to 50 mol% of ZnF₂, 5 to 25 mol% of PbF₂, 6 to 19 mol% of BaF₂, 5 to 15 mol% of SrF₂, 0 to 7 mol% of CdF₂, 0 to 10 mol% of LaF₃, 0 to 4 mol% of at least one member selected from the group consisting of ScF₃, YF₃, GdF₃ and LuF₃, 0 to 5 mol% of AlF₃, and 0 to 15 mol% of LiF or NaF, with the total amount of the components being 100 mol%.
(e) Fluoride glass containing 43 to 55 mol% of at least one member selected from the group consisting of ZrF₄ and HfF₄, 18 to 28 mol% of BaF₂, 0 to 10 mol% of PbF₂, 1.5 to 6 mol% of LaF₃, 0 to 4 mol% of one member selected from the group consisting of ScF₃, YF₃, GdF₃ and LuF₃, 1.5 to 5 mol% of AlF₃, and 15 to 25 mol% of at least one member selected from the group consisting of LiF and NaF, with the total amount of the components being 100 mol%.
(f) Fluoride glass containing 43 to 55 mol% of at least one member selected from the group consisting of ZrF₄ and HfF₄, 18 to 28 mol% of BaF₂, 1.5 to 6 mol% of LaF₃, 0 to 4 mol% of one member selected from the group consisting of ScF₃, YF₃, GdF₃ and LuF₃, 1.5 to 5 mol% of AlF₃, and 15 to 25 mol% of at least one member selected from the group consisting of LiF and NaF, with the total amount of the components being 100 mol%.
(g) Fluoride glass containing 10 to 40 mol% of InF₃, 20 to 50 mol% of ZnF₂, 6 to 30 mol% of BaF₂, 5 to 15 mol% of SrF₂, 0 to 25 mol% of PbF₂, 0 to 7 mol% of CdF₂, 1.5 to 6 mol% of at least one member selected from the group consisting of LaF₃, ScF₃, YF₃, GdF₃ and LuF₃, 1.5 to 5 mol% of AlF₃ or GaF₃ and 2 to 10 mol% of LiF or NaF, with the total amount of the components being 100 mol%.

A combination of the core (b) and the cladding (d) or (f), and a combination of the core (c) and the cladding (f) or (g) are preferred. In the case of the optical fibre having the combination of the core (b) and the cladding (f), the use of a zirconium-based fluoride glass for the cladding will enable the glass transition temperature and crystallization temperature comparable to those of the core to be achieved with the cladding, and also permit Δn to become great.

The rare earth metal ions to be doped into the core of the optical fibre for an optical amplifier in accordance with the invention may be one member selected from the group consisting of Pr³⁺, Pr³⁺-Yb³⁺, Pr³⁺-Nd³⁺, and Pr³⁺-Er³⁺. Typically, Pr³⁺ is used, but its codoping with other ions will be effective for optical amplification, because it will result in the stimulated emission due to transition within the 4f shell as in the case of Pr³⁺. The doping of rare earth metal active ions such as Pr, Yb, Nd or Er makes it possible to achieve optical amplification at various wavelengths, thus permitting high-performance optical communication systems.

The diameter of the optical fibre is generally 2 µm or less, preferable 1.95 µm or less.

### EXAMPLES

The following examples 1 to 5 are given by way of background. It is noted that in each example a chloride, bromide or iodide substituent may be incorporated in the cladding glass material, each example then being a preferred embodiment of the fluoride glass optical fibre claimed.

### Example 1

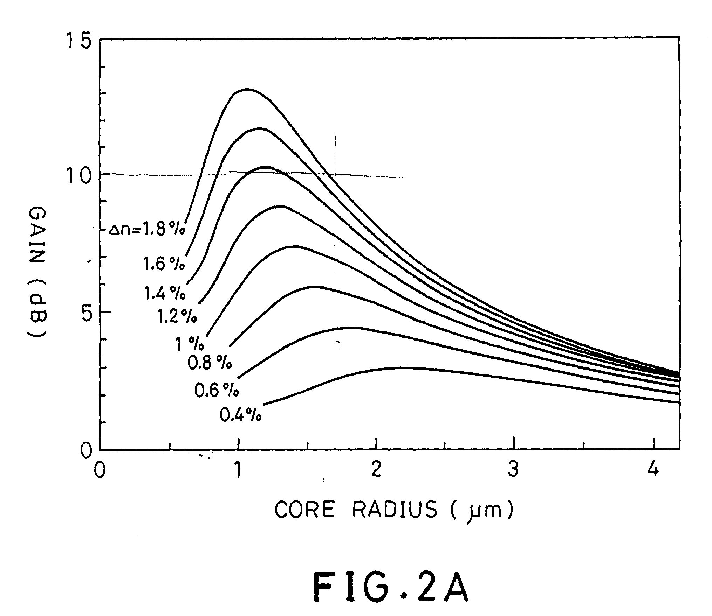

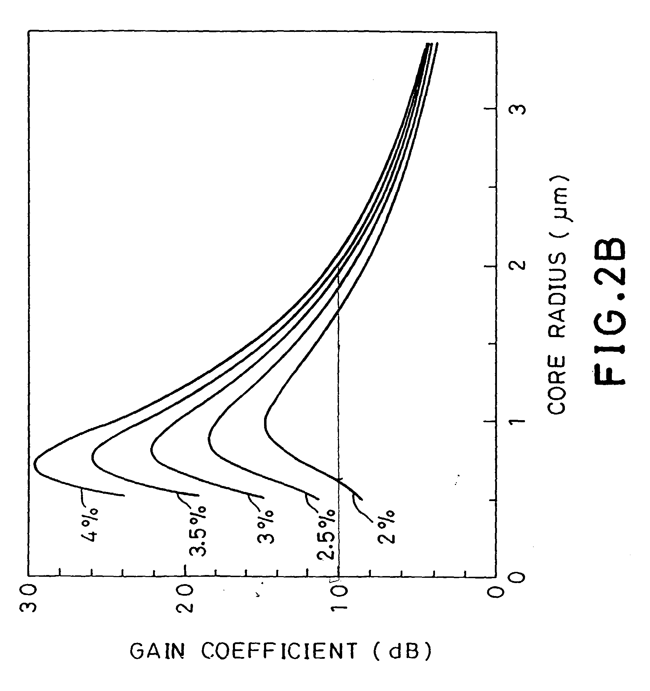

Figs. 2A and 2B are each a graph illustrating an optical characteristic of an optical fibre plotting signal gain per pump power of 100 mW vs. core radius. Signal gain (G) expressed in dB is calculated from the following equation (M. J. F. Digonnet, IEEE Journal of Quantum Electronics, vol. 26, No. 10, P. 1788, 1990):$\text{G = 4.3} \frac{\text{στ}}{{\text{hν}}_{\text{p}}} \frac{\text{P}}{\text{A}} \frac{\text{F}}{{\text{η}}_{\text{p}}}$ where σ is the stimulated emission cross-section of the ¹G₄-³H₅ transition (3.5×10⁻²² cm²), τ is the lifetime of the ¹G₄ (110 µsec), h is Planck's constant, νₚ is the frequency of pump wavelength, P is pump power, A is the cross-sectional area of the core, and F/ηₚ is a value calculated from the equation:$\begin{matrix}\begin{matrix}\begin{matrix}{\text{F/η}}_{\text{p}} \text{=} \frac{{\text{a}}^{\text{2}}}{{\text{(W}}_{\text{s}} {\text{}}^{\text{2}} {\text{+ W}}_{\text{p}} {\text{}}^{\text{2}} \text{)}} \frac{\text{1}}{{\text{1 - exp(-(a/W}}_{\text{p}} {\text{}}^{\text{2}} \text{))}}\end{matrix} \\ {\text{W}}_{\text{s,p}} {\text{= a(0.46 + 1.145Vs}}_{\text{,p}} {}^{\text{-1.5}} {\text{+ 2.036V}}_{\text{s,p}} {}^{\text{-6}} \text{)}\end{matrix}\end{matrix}$ where Vₛ and Vₚ are V values at signal and pump wavelengths, respectively.

As shown in Figs. 2A and 2B, when the relative refractive index difference is 1.4 % or more, gain per 100 mW is 10 dB or more. Thus, semicondcutor laser pumping can achieve such a practically acceptable gain.

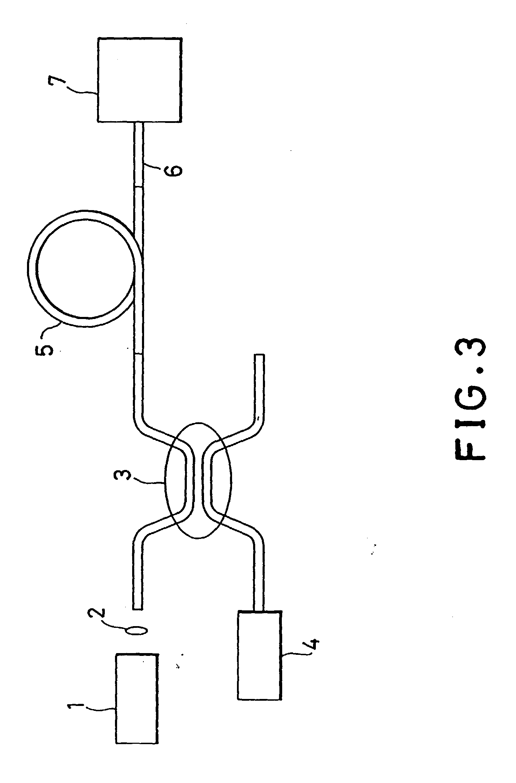

Fig. 3 is a block diagram illustrating an arrangement of an optical fibre amplifier using the optical fibre of the present invention. The reference numeral 1 denotes a pump light source (a Ti-sapphire laser with a pump wavelength of 1.017 µm), 2 is a lens, 3 is a photocoupler, 4 is a single source (a distributed feedback (DFB) laser lasing at 1.31 µm), and 5 is a fluoride glass optical fibre of the present invention.

An output from the optical fibre 5 was guided to an optical spectrum analyzer 7 via an optical fibre pigtail 6 to monitor signal light intensities when the pump light source was turned on and off.

In the arrangement of the amplifier shown in Fig. 3, there was used a fluoride optical fibre with the core 5 doped with 500 ppm of Pr³. It had a core diameter of 2 µm, a relative refractive index difference of 3.7%, and a length of 20 m. The composition of the core glass was 49ZrF₄-17BaF₂-8BaCl₂-3.5LaF₃-2.0YF₃-2.5AlF₃-18.0LiF (mol%), while the composition of the cladding glass was 49ZrF₄-10BaF₂-15BeF₂-3.5LaF₃-2.0YF₃-2.5AlF₃-18.0LiF (mol%).

Fig. 4 is a graph illustrating dependence of gain on the pump power in the optical fibre for an optical amplifier obtained in this Example.

In Fig. 4 , the gain indicated by the solid line is that of the optical fibre for an optical amplifier of this Example, while the gain indicated by the dotted line is that of a comparison optical fibre for an optical amplifier. The construction of the comparison optical fibre is as described below.
Pr³⁺ concentration: 500 ppm
Relative refractive index difference: 3.7%
Core diameter: 2 µm
Core glass composition: 53ZrF₄-16BaF₂-15PbF₂-3.5LaF₃-2.0YF₃-2.5AlF₃-8LiF (mol%)
Cladding glass composition: 47.5ZrF₄-23.5BaF₂-2.5LaF₃-2.0YF₃-4.5AlF₃-20NaF (mol%)

The above-described comparison optical fibre for an optical amplifier has no chlorine incorporated in the core glass.

Although the constructional elements of the optical fibre for an optical amplifier of this Example are the same as those of the comparison optical fibre for an optical amplifier, it is understood from Fig. 4 that a higher gain is obtained in this Example than in the comparison example. The reason for this difference therebetween may be as follows: The incorporation of BaCl₂ into the core glass results in the substitution of part of the fluorine in the Zr-F bonds by Cl. As a result, Zr-Cl bonds with a low phonon energy are formed, and the ratio of multiphonon relaxation from the ¹G₄ level to the ³F₄ level of Pr³⁺ is decreased. Consequently, the quantum efficiency of the transition from ¹G₄ to ³H₅ is increased.

In this Example, experiments were conducted using BaCl₂ as a chlorine dopant. However, other chlorides such as BaFCl, LaCl₃, PbCl₂, AlCl₃, LiCl or YCl₃ may be used as a chlorine dopant. Alternatively, the core glass may be melted in chlorine-containing gas such as Cl₂, HCl or CCl₄. Doping of chlorine as well as Pr³⁺ into the core glass, therefore, enables the fabrication of an efficient optical fibre amplifier.

In this Example, the rate of substitution of fluorine ions by chlorine ions was adjusted to about 5.5%, but the fabrication of an optical fibre was possible even if this rate was increased to 30%.

### Example 2

The dependence of gain on pump power at 1.31 µm was measured using an optical fibre for an optical amplifier which has the same arrangement as in Fig. 3 and which had a core glass composition of 49ZrF₄-17BaF₂-8BaBr₂-3.5LaF₃-2.0YF₃-2.5AlF₃-18LiF (mol%), a cladding glass composition of 49ZrF₄-10BaF₂-15BeF₂-3.5LaF₃-2.0YF₃-2.5AlF₃-18LiF (mol%), a Pr³⁺ concentration of 500 ppm, a core diameter of 2µm, a relative refractive index difference of 3.7%, and a length of 20 m. As in the case of Example 1, it was confirmed that the amplification characteristics were improved by substituting part of the fluorine in the core glass by another halogen (bromine in this case). The fabrication of an optical fibre was possible even when the rate of substitution of fluorine by bromine was increased to 30%.

In this Example, BaBr₂ was used as a bromine dopant. However, other bromides such as BaFBr, PbBr₂, LaBr₃, YBr₃, or LiBr may be used as a bromine dopant. Alternatively, doping with bromine ions can be performed by melting the core glass in bromine-containing gas (e.g. Br₂, HBr).

### Example 3

The dependence of gain on the pump power at the 1.31 µm band was measured in the same manner as in Example 1 using an optical fibre for an optical amplifier which had a core glass composition of 49ZrF₄-17BaF₂-8BaI₂-3.5LaF₃-2.0YF₃-2.5AlF₃-18.0LiF (mol%), a cladding glass composition of 49ZrF₄-10BaF₂-15BeF₂-3.5LaF₃-2.0YF₃-2.5AlF₃-18LiF (mol%), a Pr³⁺ concentration of 500 ppm, a core diameter of 2 µm, a relative refractive index difference of 3.7%, and a length of 20 m. As in the case of Example 1, it was confirmed that the amplification characteristics of the optical fibre were improved by substituting part of the fluorine in the core glass by another halogen (iodine in this case). The fabrication of an optical fibre was possible even when the rate of substitution of fluorine by iodine was increased to 30%.

In this Example, BaI₂ was used as an iodine dopant. However, other iodides such as PbI₂, BaFI, LaI₃, YI₃, or LiI may be used as iodine dopant. Alternatively, doping with iodine can be performed by melting the core glass in iodine-containing gas.

In the above-mentioned Examples 1 through 3 , ZrF₄-BaF₂-LaF₃-YF₃-AlF₃-LiF type glass in which part of BaF₂, one of the components, was substituted by BeF₂ was used as the cladding glass. The role of this BeF₂ is to lower the refractive index of the glass, and this component is effective in increasing the relative refractive index difference between the core and the cladding. Moreover, BeF₂ may substitute ZrF₄, as well as BaF₂. The cladding glass may be a ZrF₄-BaF₂-LaF₃-AlF₃-NaF type glass which contains BeF₂, or ZrF₄-HfF₄-BaF₂-LaF₃-YF₃-AlF₃-LiF-NaF type glass which contains BeF₂. The use of these glasses can increase the relative refractive index difference to 3.7 % or more. The core glass to be doped with a halogen other than fluorine may be ZrF₄-BaF₂-PbF₂-LaF₃-YF₃-AlF₃-LiF type glass (Table 1 ).

**Table 1**

| Composition of Mixed-Halide Glass for Core (mol %) | | | | | | | | | | |
|---|---|---|---|---|---|---|---|---|---|---|
| ZrF₄ | HfF₄ | BaF₂ | BeF₂ | LaF₃ | YF₃ | AlF₃ | NaF | LiF | PbF₂ | BaCl₂ |
| 49 | | 10 | 15 | 3.5 | 2 | 2.5 | | 18 | | |
| 25 | | 10 | 24 | 3.5 | 2 | 2.5 | | 18 | | |
| 31.5 | 16 | 13.5 | 10 | 2.5 | 2 | 4.5 | 20 | | | |
| 51 | | 20 | 15 | 4.5 | | 4.5 | 20 | | | |
| 53 | | 14 | | 3.5 | 2 | 2.5 | | 8 | 2 | 10 |

### Example 4

The dependence of gain on the pump power at the 1.31 µm band was measured in the same manner as in Example 1 using an optical fibre which had a core glass composition of 35InF₃-25ZnF₂-5BaF₂-5BaCl₂-10SrF₂-15PbF₂-4AlF₃-LiF (mol%), a cladding glass composition of 35InF₃-25ZnF₂-15BaF₂-10SrF₂-5CdF₂-5AlF₃-5LaF₃ (mol%), a Pr³⁺ concentration of 500 ppm, a core diameter of 2 µm, a relative refractive index difference of 3.7%, and a length of 20 m. As in the case of Example 1, it was confirmed that the amplification characteristics were improved by substituting part of the fluorine in the core glass by chlorine. While chlorine was doped in this example, it was confirmed that the amplification characteristics were improved when the core glass was doped with bromine or iodine by the use of a halide such as BaBr₂ or BaI₂.

A halide such as ZnCl₂, SrCI₂, ZnBr₂, SrBr₂, ZnI₂ or SrI₂ may be used to perform doping with chlorine, bromine or iodine.

Chlorine, bromine or iodine need not be doped singly into the core, but it may be doped as a combination like chlorine-bromine or bromine-iodine. Moreover, the rate of substitution by chlorine, bromine or iodine is in no way restricted to the values described in the above Examples.

### Example 5

In Examples 1 to 4 , the rare earth metal ions doped into the core were Pr³⁺ only. In the optical fib for an optical amplifier mentioned in these Examples, however, Pr³⁺(0.2 wt%)-Yb³⁺(0.3 wt%), Pr³⁺(0.2 wt%)-Nd³⁺(2 wt%), or Pr³⁺(0.2 wt%)-Er³⁺(1 wt%) may be doped instead of Pr³⁺. In the case of Pr³⁺(0.2 wt%)-Yb³⁺(0.3 wt%) and Pr³⁺(0.2 wt%)-Er³⁺(1 wt%), pumping is performed with light at 0.98 µm. In the case of Pr³⁺(0.2 wt%)-Nd³⁺(2 wt%), pumping is performed with light at 0.8 µm. Comparison was made in terms of gain characteristics between the optical fibre with the core doped with chlorine, bromine or iodine and the optical fibre with the core not doped with halogen. It was confirmed that the optical fibre with the core doped with chlorine, bromine or iodine gave a higher gain at the 1.3 µm band at a lower pump power.

In Examples 1 to 5 , chlorine, bromine or iodine was doped into the core only, but may be simultaneously doped into the cladding.

When the concentration of each of Yb³⁺, Nd³⁺ or Er³⁺ to be codoped with Pr³⁺ was within the range larger than 0 wt% and up to 3 wt%, it was confirmed that the gain characteristics could be improved by also doping at least one halogen of chlorine, bromine and iodine.

The concentration of the Yb³⁺, Nd³⁺ or Er³⁺ is in no way restricted to the above-mentioned value. Nor are the rare earth metal ions restricted to Pr³⁺, Yb³⁺, Nd³⁺ or Er³⁺, but the quantum efficiency can be improved by effecting the above-described substitution in the presence of the transition of other rare earth metal ions.

## Claims

1. A fluoride glass optical fibre for an optical amplifier of which the core and the cladding are each of glass selected from either a ZrF₄ glass or an InF₃ glass, said core glass containing rare earth metal ions;
characterised in that:
parts of the fluorine in the core glass and in the cladding glass are substituted by at least one of the halogens: chlorine, bromine and iodine.

2. A fluoride glass optical fibre as claimed in claim 1, wherein said core glass is of ZrF₄ glass and contains a Ba halide, the halide in said Ba halide being chloride, bromide or iodide.

3. A fluoride glass optical fibre as claimed in either of claims 1 or 2, wherein said rare earth metal ions are selected from the group consisting of Pr³⁺, Pr³⁺-Yb³⁺, Pr³⁺-Nd³⁺, and Pr³⁺-Er³⁺.

4. A fluoride glass optical fibre as claimed in claim 3, wherein said core glass is selected from one of a ZrF₄-BaF₂ LaF₃-YF₃-AlF₃-LiF type glass and a ZrF₄-BaF₂-PbF₂-LaF₃-YF₃-AlF₃-LiF type glass, and said cladding glass is selected from one of a ZrF₄-BaF₂-LaF₃-YF₃-AlF₃-LiF type glass, a ZrF₄-BaF₂-LaF₃-AlF₃-NaF type glass, and a ZrF₄-HfF₄-BaF₂-LaF₃-YF₃-AlF₃-LiF-NaF type glass, wherein part of the BaF₂ content thereof or part of the ZrF₄ content as well as BaF₂ content is substituted with BeF₂, in which core glass and cladding glass, parts of the fluorine are substituted by at least one of the halogens: chlorine, bromine and iodine.

5. A fluoride glass optical fibre as claimed in claim 3, wherein said core glass is of 10 to 40 mol % InF₃, 20 to 50 mol % ZnF₂, 5 to 25 mol % PbF₂, 6 to 19 mol % BaF₂, 5 to 15 mol % SrF₂, 0 to 7 mol % CdF₂, 0 to 10 mol % LaF₃, 0 to 4 mol % of at least one member selected from the group consisting of ScF₃, YF₃, GdF₃ and LuF₃, 0 to 5 mol % AlF₃ and 0 to 15 mol % LiF or NaF with the total amount of the components being 100 mol %, and said cladding glass is of 10 to 40 mol % InF₃, 20 to 50 mol % ZnF₂, 5 to 25 mol % PbF₂, 6 to 19 mol % BaF₂, 5 to 15 mol % SrF₂, 0 to 7 mol % CdF₂, 0 to 10 mol % LaF₃, 0 to 4 mol % of at least one member selected from the group consisting of ScF₃, YF₃, GdF₃ and LuF₃, 0 to 5 mol % AlF₃, and 0 to 15 mol % LiF or NaF with the total amount of the components being 100 mol %, in which core glass and cladding glass, parts of the fluorine are substituted by at least one of the halogens: chlorine, bromine and iodine.

6. A fluoride glass optical fibre as claimed in any of claims 1 to 5, wherein said core has a core radius of 1.95 µm or less.

7. An optical fibre amplifier comprising a length of the fluoride glass optical fibre of any of claims 1 to 6.

## Patentansprüche

1. Fluoridglaslichtleitfaser für einen optischen Verstärker, deren Kern und Umhüllung jeweils aus einem entweder aus einem ZrF₄-Glas oder einem InF₃-Glas ausgewählten Glas sind, wobei das Kernglas Metallionen von seltenen Erden enthält;
dadurch gekennzeichnet, daß Teile des Fluors in dem Kernglas und in dem Umhüllungsglas durch mindestens eines der Halogene Chlor, Brom und Jod substituiert sind.

2. Fluoridglaslichtleitfaser nach Anspruch 1, wobei das Kernglas aus ZrF₄-Glas ist und ein Ba-Halogenid enthält, wobei das Halogenid in dem Ba-Halogenid Chlorid, Bromid oder Iodid ist.

3. Fluoridglaslichtleitfaser nach einem der Ansprüche 1 oder 2, wobei die Metallionen der seltenen Erden aus der aus Pr³⁺, Pr³⁺-Yb³⁺, Pr³⁺-Nd³⁺ und Pr³⁺-Er³⁺ bestehenden Gruppe ausgewählt sind.

4. Fluoridglaslichtleitfaser nach Anspruch 3, wobei das Kernglas aus einem Glases des Typs ZrF₄ - BaF₂ - LaF₃ - YF₃ - AlF₃ - LiF₄ und einem Glas des Typs ZrF₄ - BaF₂ - PbF₂ - LaF₃ - YF₃ - AlF₃ - LiF ausgewählt ist, und das Umhüllungsglas aus einem Glas des Typs ZrF₄ - BaF₂ - LaF₃ - YF₃ - AlF₃ - LiF, einem Glas des Typs ZrF₄ - BaF₂ - LaF₃ - AlF₃ - NaF und einem Glas des Typs ZrF₄ - HfF₄ - BaF₂ - LaF₃ - YF₃ - AlF₃ - LiF - NaF ausgewählt ist, wobei ein Teil des BaF₂-Gehalts darin oder ein Teil des ZrF₄-Gehalts als auch des BaF₂-Gehalts durch BeF₂ substituiert ist, wobei in dem Kernglas und dem Umhüllungsglas Teile des Fluors durch mindestens eines der Halogene Chlor, Brom und Jod substituiert sind.

5. Fluoridglaslichtleitfaser nach Anspruch 3, wobei das Kernglas aus 10 bis 40 Molprozent InF₃, 20 bis 50 Molprozent ZnF₂, 5 bis 25 Molprozent PbF₂, 6 bis 19 Molprozent BaF₂, 5 bis 15 Molprozent SrF₂, 0 bis 7 Molprozent CdF₂, 0 bis 10 Molprozent LaF₃, 0 bis 4 Molprozent von mindestens einem Bestandteil, der aus der aus ScF₃, YF₃, GdF₃ und LuF₃ bestehenden Gruppe ausgewählt ist, 0 bis 5 Molprozent AlF₃ und 0 bis 15 Molprozent LiF oder NaF ist, wobei die Gesamtmenge der Komponenten 100 Molprozent beträgt, und das Umhüllungsglas aus 10 bis 40 Molprozent InF₃, 20 bis 50 Molprozent ZnF₂, 5 bis 25 Molprozent PbF₂, 6 bis 19 Molprozent BaF₂, 5 bis 15 Molprozent SrF₂, 0 bis 7 Molprozent CdF₂, 0 bis 10 Molprozent LaF₃, 0 bis 4 Molprozent von mindestens einem Bestandteil, der aus der aus ScF₃, YF₃, GdF₃ und LuF₃ bestehenden Gruppe ausgewählt ist, 0 bis 5 Molprozent AlF₃ und 0 bis 15 Molprozent LiF oder NaF ist, wobei die Gesamtmenge der Komponenten 100 Molprozent beträgt, wobei in dem Kernglas und dem Umhüllungsglas Teile des Fluors durch mindestens eines der Halogene Chlor, Brom und Jod substituiert sind.

6. Fluoridglaslichtleitfaser nach einem der Ansprüche 1 bis 5, wobei der Kern einen Kernradius von 1,95 µm oder weniger besitzt.

7. Lichtleitfaserverstärker, umfassend eine Strecke der Fluoridgaslichtleitfaser nach einem der Ansprüche 1 bis 6.

## Revendications

1. Fibre optique en verre au fluorure pour un amplificateur optique, dont le coeur et la gaine sont chacun en verre sélectionné parmi un verre ZrF₄ ou un verre InF₃, le verre de coeur contenant des ions métalliques de terres rares;
caractérisée en ce que
des parties du fluor dans le verre de coeur et dans le verre de gaine sont remplacées par au moins l'un des halogènes suivants : chlore, brome et iode.

2. Fibre optique en verre au fluorure suivant la revendication 1, dans lequel le verre de coeur est du verre de ZrF₄ et contient un halogénure Ba, l'halogénure dans l'halogénure Ba étant le chlorure, le brome ou l'iodure.

3. Fibre optique en verre au fluorure suivant la revendication 1 ou 2, dans laquelle les ions métalliques de terres rares sont sélectionnés parmi le groupe constitué de Pr³⁺, Pr³⁺-Yb³⁺, Pr³⁺-Nd³⁺, et Pr³⁺-Er³⁺.

4. Fibre optique en verre au fluorure suivant la revendication 3, dans laquelle le verre de coeur est sélectionné parmi un verre de type ZrF₄-BaF₂ LaF₃-YF₃-AlF₃-LiF et un verre de type ZrF₄-BaF₂-PbF₂-LaF₃-YF₃-AlF₃-LiF, et le verre de gaine est sélectionné parmi les verres que sont un verre de type ZrF₄-BaF₂-LaF₃-YF₃-AlF₃-LiF et un verre de type ZrF₄-BaF₂-LaF₃-AlF₃-NaF, et un verre de type ZrF₄-HfF₄-BaF₂-LaF₃-YF₃-AlF₃-LiF-NaF, dans lequel une partie de son contenu en BaF₂ ou une partie du contenu en ZrF₄, ainsi qu'une partie du contenu en BaF₂ est remplacée par du BeF₂, et dans ce verre de gaine et ce verre de coeur des parties du fluor sont remplacées par au moins un des halogénures suivants : chlore, brome et iode.

5. Fibre optique en verre au fluorure suivant la revendication 3, dans lequel le verre de coeur est du InF₃ de 10 à 40% en mole, du ZnF₂ de 20 à 50% en mole, du PbF₂ de 5 à 25% mole, du BaF₂ de 6 à 19% en mole, du SrF₂ de 5 à 15% en mole, du CdF₂ de 0 à 7% en mole, du LaF₃ de 0 à 10% en mole, de 0 à 4% en mole d'au moins un élément sélectionné parmi le groupe constitué de ScF₃, YF₃, GdF₃ et LuF₃, de 0 à 5% en mole d'AlF₃ et 0 à 15% en mole de LiF ou NaF avec la quantité totale des composants qui est de 100% en mole, et le verre de gainage est de 10 à 40% en mole d'InF₃, 20 à 50% mole de ZnF₂, 5 à 25% en mole de PbF₂, 6 à 19% en mole de BaF₂, 5 à 15% en mole de SrF₂, 0 à 7% en mole de CdF₂, 0 à 10% en mole de LaF₃, 0 à 4% en mole d'au moins un élément sélectionné parmi le groupe constitué de ScF₃, YF₃, GdF₃ et LuF₃, 0 à 5% en mole de AlF₃, et 0 à 15% en mole de LiF ou Naf avec la quantité totale des composants qui est de 100% en mole et dans ce verre de gaine et ce verre de coeur des parties du fluor sont remplacées par au moins l'un des halogénures que sont le chlore, le brome et l'iode.

6. Fibre optique en verre au fluorure suivant l'une quelconque des revendications 1 à 5, dans laquelle le coeur a un rayon de coeur de 1,95 µm ou moins.

7. Amplificateur à fibre optique comportant une longueur de la fibre optique en verre de fluorure suivant l'une quelconque des revendications 1 à 6.
